Europäisches Patentamt

European Patent Office

Office européen des brevets

(1) Publication number: **0 113 986**
**B1**

(12) **EUROPEAN PATENT SPECIFICATION**

(45) Date of publication of patent specification: **20.04.88**

(51) Int. Cl.⁴: **G 11 B 5/52**

(21) Application number: **83307691.2**

(22) Date of filing: **16.12.83**

(54) **Methods of and apparatus for recording a digital information signal.**

(30) Priority: **17.12.82 JP 222298/82**

(43) Date of publication of application:
**25.07.84 Bulletin 84/30**

(45) Publication of the grant of the patent:
**20.04.88 Bulletin 88/16**

(84) Designated Contracting States:
**DE FR GB NL**

(56) References cited:
**EP-A-0 044 713**
**DE-A-3 046 370**
**DE-B-1 812 789**
**FR-A-2 416 523**
**FR-A-2 521 806**
**GB-A-2 029 607**

**Neues aus der Technik, No. 6, 15.12.78, Article "Spurfolgesystem", Seiten 1-2**

(73) Proprietor: **SONY CORPORATION**
**7-35 Kitashinagawa 6-Chome Shinagawa-ku**
**Tokyo 141 (JP)**

(72) Inventor: **Odaka, Kentaro c/o Sony Corporation**
**7-35 Kitashinagawa 6-chome Shinagawa-ku**
**Tokyo (JP)**

(74) Representative: **Cotter, Ivan John et al**
**D. YOUNG & CO. 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to methods of and apparatus for recording an information signal on a recording medium by way of a rotary magnetic head.

It has been proposed that, when a video signal and an audio signal are to be recorded on a magnetic tape in the form of one slanting track per unit time by means of a rotary head assembly of helical scan type and then reproduced therefrom, the video signal and the audio signal are pulse-code-modulated (PCM) and then recorded and reproduced. A reason for this is that, if the video signal and so on are pulse-code-modulated, high definition recording and reproducing become possible.

In this case, in a conventional video tape recorder (VTR), tracking control of the rotary head to cause the head correctly to trace or track the record track upon reproducing is carried out as follows. Upon recording, tracking control is carried out in that a control signal, which is recorded on one edge of the magnetic tape (in its width direction) by a stationary or fixed magnetic head, is reproduced by the fixed head and the reproduced control signal and the rotary phase of the rotary head have a constant mutual phase relationship. In this tracking control method, therefore, a special fixed magnetic head must be provided for tracking control. When it is desired that the recording and reproducing apparatus be made small in size, such fixed magnetic head causes a disadvantage in view of its mounting place and so on.

Therefore, to provide a tracking control method which does not use the fixed head, the following method has been proposed. In this method, for example, an analog video signal is recorded and reproduced in a so-called successive state (that is a state in which a guard band is not formed between adjacent tracks), and a tracking pilot signal is recorded by the rotary head and superimposed on the track on which the video signal is recorded. The pilot signal frequency is in a low frequency band below the frequency spectrum of the recorded video signal so that, upon reproducing, the pilot signal can be separated with ease. However, since the pilot signal is of relatively low frequency, it is rather difficult to erase the pilot signal. Therefore, if, while erasing a signal which was previously recorded, a new signal is newly recorded on that portion, the disadvantage arises that the preceding recorded signal remains. Depending on the modulation system, when the information signal to be recorded has a spectrum in the low frequency band, like a PCM signal, it is quite difficult to separate the pilot signal.

Furthermore, since frequencies of four kinds are used as the pilot signal, the construction of the circuit becomes complicated.

UK Patent Application Publication No. GB—A—2 067 793 describes a tracking control system in which reference signal bursts are provided as tracking pilot signals spaced along each slanting track but staggered for adjacent tracks. The tracking pilot signals in each track are spaced by an integer number of line intervals, typically 2 or 3, and each tracking pilot signal is included within part of the horizontal blanking interval of the video signal. The tracking pilot signals are gated with gating pulses during reproduction, the pulses being timed to suppress pilot signals from the track being read but to detect pilot signals from adjacent tracks reproduced as a result of mistracking. The resulting error signals correct the tracking by adjusting the speed of the rotary heads and/or by lateral displacement of the heads. Since each tracking pilot signal is available at an integer multiple of the line interval, only a single tracking correction operation can take place at each of these times.

According to the invention there is provided a method of recording an information signal on a plurality of slanting tracks on a recording medium by way of a pair of rotary heads having different azimuth angles, the method comprising:

recording the information signal in a first predetermined area on each of the slanting tracks formed without a guard band between adjacent tracks on the recording medium by the rotary heads; and

recording a tracking pilot signal in at least a second predetermined area on each of the plurality of slanting tracks, wherein the positions at which the tracking pilot signal is recorded on any three adjacent tracks are such as not to overlap one another in a direction perpendicular to the tracking direction of the rotary heads;

characterized in that:

the information signal is digitised to form a digital information signal for recording on the recording medium;

a plurality of tracking pilot signals are recorded in the second predetermined area independently of the digital information signal;

erasing signals are recorded between individual ones of the tracking pilot signals; and

each of the tracking pilot signals in the second predetermined area on any one of the tracks is arranged not to overlap any of the tracking pilot signals on the adjacent two tracks in the direction perpendicular to the tracking direction.

The invention also provides apparatus for recording an information signal on a plurality of slanting tracks on a recording medium, the apparatus comprising:

a pair of rotary heads having different azimuth angles and operative to record the information signal in a first predetermined area on each of the slanting tracks formed without a guard band between adjacent tracks on the recording medium, the rotary heads also being operative to record a tracking pilot signal in at least a second predetermined area on each of the plurality of slanting tracks, wherein the positions at which the tracking pilot signal is recorded on any three adjacent tracks are such as not to overlap one another in a direction perpendicular to the tracking direction of the rotary heads;

characterised in that:

the information signal is digitised to form a digital information signal for recording on the recording medium;

a plurality of tracking pilot signals are recorded in the second predetermined area independently of the digital information signal;

erasing signals are recorded between individual ones of the tracking pilot signals; and

each of the tracking pilot signals in the second predetermined area on any one of the tracks is arranged not to overlap any of the tracking pilot signals on the adjacent two tracks in the direction perpendicular to the tracking direction.

Reference is made to European Patent Application No. 87200927 being a divisional application of the present one.

The invention will now be further described, by way of illustrative and non-limiting example, with reference to the accompanying drawings, in which like references designate like elements and parts throughout, and in which:

Figure 1 is a diagram showing a recording track pattern effected by a previously proposed tracking control system;

Figure 2 is a block diagram showing the previously proposed tracking control system;

Figure 3 is a diagram showing a recording track pattern effected by a recording apparatus embodying the present invention;

Figure 4 is a diagram for explaining details of the track pattern shown in Figure 3;

Figure 5 is a block diagram showing a tracking control system for use with a recording apparatus embodying the present invention; and

Figures 6A to 6C are respective waveform diagrams for explaining the operation of the system of Figure 5.

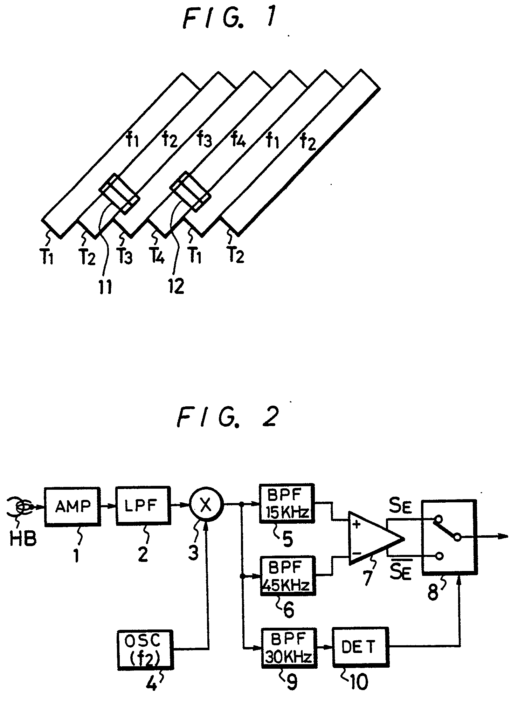

Before describing an embodiment of the present invention, a previously proposed tracking control method will be described with reference to Figures 1 and 2. Two rotary heads HA and HB (only HB being shown in Figure 2), each having a different so-called azimuth angle, are located so as to have an angular distance of 180° between them. Pilot signals of four different frequencies, for example $f_1=100$ kHz, $f_2=115$ kHz, $f_3=160$ kHz and $f_4=145$ kHz, are used. The rotary head HA sequentially forms alternate tracks $T_1$ and $T_3$ on which an FM-modulated video signal is recorded. The pilot signal with the frequency $f_1$ is recorded on the track $T_1$, being superimposed on the recorded video signal, while the pilot signal with the frequency $f_3$ is recorded on the track $T_3$, being superimposed upon the recorded video signal. The other rotary head HB sequentially forms alternate tracks $T_2$ and $T_4$ on which the FM-modulated video signal is recorded. The pilot signal with the frequency $f_2$ is recorded on the track $T_2$, being superimposed on the recorded video signal, while the pilot signal with the frequency $f_4$ is recorded on the track $T_4$, being

superimposed upon the recorded video signal. The tracks $T_1$, $T_2$, $T_3$ and $T_4$ are formed in a so-called successive state, that is there are no guard bands between adjacent tracks.

Tracking control upon reproducing is carried out as follows. Since approximately the same tracking control operation is performed for each of the respective two rotary heads HA and HB, only the control operation for one head, namely the head HB, will be described with reference to Figure 2.

When the rotary head HB correctly traces the track $T_2$ or $T_4$, a "just tracking" or correct tracking state of the head HB is performed. As shown in Figure 2, an output reproduced by the head HB is supplied through a playback amplifier 1 to a low pass filter 2 from which only a pilot signal in the low frequency band is derived. This low frequency band component is supplied to a multiplying circuit 3 in which it is multiplied by a signal having the frequency $f_2$ from an oscillator 4.

When the head HB traces the track $T_2$, as shown by a reference numeral 11 in Figure 1, the multiplying circuit 3 generates a signal $E_1$ having a frequency of $(f_2-f_1)=15$ kHz and a signal $E_2$ having a frequency of $(f_3-f_2)=45$ kHz. When the head HB traces the track $T_4$, as shown by a reference numeral 12 in Figure 1, the multiplying circuit 3 generates a signal $S_1$ having a frequency of $(f_4-f_2)=30$ kHz in addition to the signal $E_1$ having the frequency of $(f_2-f_1)=15$ kHz and the signal $E_2$ having the frequency of $(f_3-f_2)=45$ kHz.

The signals $E_1$ and $E_2$ are reproduced outputs of the pilot signals from the adjacent tracks which are not to be traced by the head HB. As is clear from Figure 1, if the reproduced output levels of both the signals $E_1$ and $E_2$ are equal to each other, the head HB is correctly tracing the tracks $T_2$ and $T_4$. Accordingly, if tracking control is carried out so as to make the reproduced output levels of the signals $E_1$ and $E_2$ equal, the "just tracking" state can be established.

To this end, an output from the multiplying circuit 3 is supplied to band pass filters 5 and 6. The bandpass filter 5 derives the signal $E_1$ having the frequency of 15 kHz, while the bandpass filter 6 derives the signal $E_2$ having the frequency of 45 kHz. The signals $E_1$ and $E_2$ are supplied to respective input terminals of a differential amplifier 7, which produces an output representing any difference between the signals $E_1$ and $E_2$. The output from the differential amplifier 7 is used to control a capstan motor, for example, in such a manner that the transport of the tape is controlled so as to reduce any difference output from the differential amplifier 7 to zero.

The pilot signals of the tracks $T_2$ and $T_4$ have opposite frequency relations to the pilot signals of the adjacent tracks on the left and righthand sides. Therefore, each time that the head HB traces the track $T_2$ or $T_4$, the tracking control direction must be reversed. That is to say, when the head HB traces the track $T_2$ the output of the pilot signal of the track $T_2$ is not delivered from the multiplying circuit 3, while when the head HB

traces the track $T_4$ the signal $S_I$ having the frequency of $(f_4-f_2)=30$ kHz is obtained therefrom, as mentioned above. Therefore, when the signal $S_I$ is detected, the direction of the tracking control is reversed.

Outputs $S_E$ and $\overline{S_E}$ from the differential amplifier 7, which are opposite in polarity, are supplied to respective input terminals of a switching circuit 8. The output from the multiplying circuit 3 is also supplied to a band pass filter 9 from which a signal component of 30 kHz is derived. This signal component is supplied to a detecting circuit 10 and thereby detected. When the signal $S_I$ having the frequency of 30 kHz is detected in the detecting circuit 10, the detecting circuit causes the switching circuit 8 to change over its position to deliver the output of the opposite polarity to control the capstan motor.

In the case of the other rotary head HA, if the signal having the frequency $f_1$ (rather than the signal having the frequency $f_2$) is supplied similarly from the oscillating circuit 4 to the multiplying circuit 3, the signal having the frequency $(f_2-f_1)=15$ kHz and the signal having the frequency $(f_4-f_1)=45$ kHz are obtained as the pilot signal outputs of the adjacent tracks. Tracking control is carried out so as to reduce any difference between the pilot signal outputs to zero. In this case, the direction of tracking control is reversed when a signal with the frequency $(f_3-f_1)=60$ kHz is detected.

When tracking control is carried out for one rotary head, since the one rotary head has a constant positional relationship relative to the other head it is not necessary to carry out tracking control for the other rotary head.

The above-described previously proposed method uses a signal of relatively low frequency as the pilot signal so that it is rather difficult to erase the recorded pilot signal. Therefore, in the event that, while erasing a signal recorded previously on a portion, a new signal is newly recorded on the same portion by being superimposed thereon, there occurs a disadvantage that the preceding recorded signal remains. Furthermore, depending on the modulation system, when the information signal to be recorded has a frequency spectrum in the low frequency band like a PCM signal, it is quite difficult to separate the pilot signal from the other signals. In addition, since signals of four different frequencies are used as the pilot signals, the construction of the circuit is complicated.

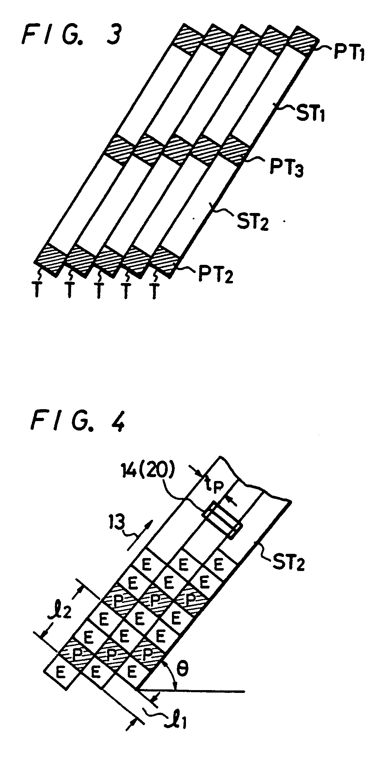

A method and apparatus embodying the invention for recording a digital information signal will now be described with reference to Figures 3 to 6.

In the present embodiment, a PCM signal is timebase-compressed thereby to form a recording area on a record track for a tracking pilot signal. As shown in Figure 3, pilot signal areas $PT_1$ and $PT_2$ are formed at opposite ends of each record track T in the longitudinal direction thereof. At the same time, a PCM signal to be recorded as one track is halved so that one PCM signal is recorded on a PCM area $ST_1$ and the other PCM signal is recorded on a PCM area $ST_2$. Also, a pilot signal area $PT_3$ is formed between the areas $ST_1$ and $ST_2$ of each track T.

On each of the pilot signal areas $PT_1$, $PT_2$ and $PT_3$ there is recorded a pilot signal of constant frequency in a pattern shown in Figure 4. The frequency of the pilot signal is selected to be of a value having a relatively small azimuth loss, for example approximately 100 kHz to 500 kHz.

In Figure 4, reference letters P designate the pilot signals, which are arranged so as not to be superimposed or to overlap as viewed from a direction perpendicular to the tracing or tracking direction of the head, which tracing direction is shown by an arrow 13. Therefore, even if the rotary head traces the three tracks shown in Figure 4, the reproduced output of the pilot signal P from each track cannot have a pilot signal from an adjacent track superimposed on it. In order to realise this operation, if the pitch or width of the track T is taken as $t_p$ and the angle of inclination of the track T relative to the longitudinal direction of the magnetic tape is taken as $\theta$, a distance $l_1$ between the recording positions of the pilot signals P on adjacent tracks in one tracing direction of the head must be selected so as to be greater than $t_p/\tan \theta$. When a plurality of pilot signals P are recorded on the respective areas $PT_1$, $PT_2$ and $PT_3$ of one track, as shown in Figure 4, a distance $l_2$ between the recording positions of one pilot signal and the next pilot signal in the tracing direction of the head in each track is selected to be of a value which satisfies the condition that $l_2=3l_1$.

In Figure 4, reference letter E represents a signal for erasing the pilot signal P. The reason for providing the erasing signal is as follows. When the pilot signal P is recorded as described above, the recorded portion of the pilot signal P of one track adjoins a portion of the adjacent track on which no pilot signal is recorded. When no signal is recorded on this portion, if a signal is thereafter newly recorded on the tape the recorded tracks are not always coincident with each other. As a result, the previously recorded pilot signal P could partially remain, that is not be erased. Therefore, in view of the possibility of a subsequent recording, the signal E which can erase the pilot signal P is recorded on that portion.

The tracking control operation which employs the pilot signal P will now be described.

Let it be assumed that, when a rotary head 20 traces the central track shown in Figure 4, the rotary head 20 traces across three tracks as shown by a reference numeral 14.

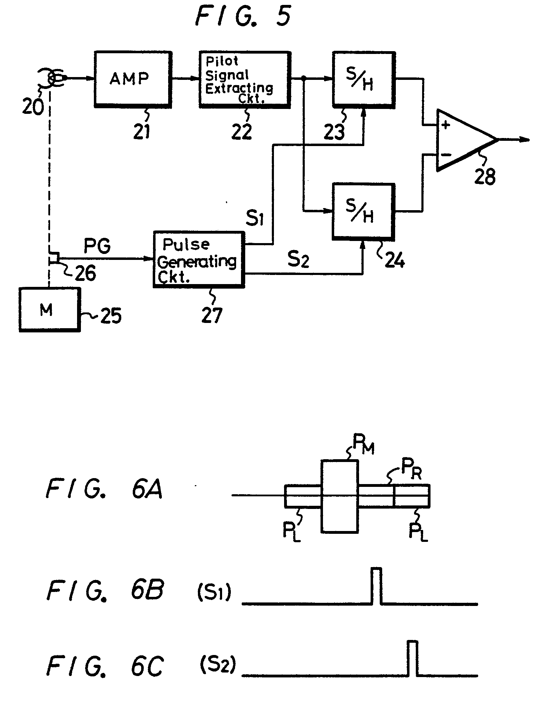

Figure 5 is a block diagram showing an example of a tracking control circuit for use with the apparatus embodying the present invention. An output from the rotary head 20 is supplied through a playback amplifier 21 to a pilot signal extracting circuit 22 from which only the reproduced output of the pilot signal P is derived. The pilot signal extracting circuit 22 may comprise a tank circuit which is tuned only to the pilot signal frequency. As shown in Figure 6A, the pilot signal derived from the extracting circuit 22 contains a pilot signal output $P_M$ which appears from the central track and has a large level, and pilot signal outputs $P_R$ and $P_L$ which appear from the right-hand side and left-hand side tracks, respectively, and are of a small level. The sequence or order in which the outputs $P_M$, $P_R$ and $P_L$ appear is always the same when the rotary head 20 traces the respective different tracks.

The output signal from the pilot signal extracting circuit 22 is supplied to sample and hold circuits 23 and 24.

A pulse PG, delivered from a pulse generator 26 upon each revolution of a drive motor 25 for driving the rotary head 20 and indicating the rotary phase of the rotary head 20, is supplied to a pulse generating circuit 27. In response to the pulse PG, the pulse generating circuit 27 generates a signal $S_1$ (Figure 6B) at a point in time when the head 20 traces the pilot signal portion of the right-hand track and a signal $S_2$ (Figure 6C) at a point in time when the head 20 traces the pilot signal portion of the left-hand track. The signal $S_1$ is supplied to the sample and hold circuit 23 and the signal $S_2$ is supplied to the sample and hold circuit 24. Consequently, the sample and hold circuit 23 generates a sampled and held output of a reproduced pilot signal output $P_R$ which is derived from the right-hand track, while the sample and hold circuit 24 generates a sampled and held output of a reproduced pilot signal output $P_L$ which is derived from the left-hand track. The sampled and held outputs are supplied to respective input terminals of a differential amplifier 28. The differential amplifier 28 produces a difference output representing any difference between the inputs thereto, which difference signal is delivered to a capstan motor (not shown). The capstan motor is so controlled that the amount of transport of the tape is controlled so as to reduce any difference in level between the outputs $P_R$ and $P_L$ to zero, whereby, when the head 20 traces the central track, it traces the adjacent tracks on the opposite sides of the central track by the same amount.

In the above embodiment, signals which are all of the same frequency are employed as the pilot signal P. In a case where a plurality of heads having different azimuth angles are employed, it is possible to use a pilot signal with a different frequency for each head with a different azimuth angle.

Mis-tracking can be avoided, without changing the frequency of the pilot signal for each head which has a different azimuth angle, by the following methods. According to one method, at a point in time when playback is started, prior to playback proper, the output levels of high frequency signals, which are outputs reproduced by, for example, two heads, each having a different azimuth angle, are inspected. In other words, the level of the high frequency output obtained when one head traces a track having a particular azimuth angle is compared with the level of the high frequency output obtained when the other head traces the track having the same azimuth angle whereby the respective heads are controlled in advance so as to trace the tracks having the corresponding azimuth angles.

According to another method, upon reproducing the high frequency outputs from the respective heads are inspected all the time. When the level of the high frequency output becomes less than a predetermined level (at this time the head is scanning a track which has a different azimuth angle), an error voltage is added to the tracking signal by means of which, in the case of two heads, the tracking positions thereof are displaced by one track pitch at a maximum.

Although three pilot signal record areas are provided in the example shown in Figure 3, the provision of at least one record area is sufficient. However, when, as in the example shown in Figure 3, a pilot signal record area is provided at both end portions and a central portion of the record track, there is an advantage that even if the record track is, for example, curved, excellent tracking can be carried out.

The sampling pulses $S_1$ and $S_2$ used in Figure 5 can be derived by a method which does not use the pulse PG, but utilises the fact that the level of the reproduced output $P_M$ of the pilot signal from, for example, the main track is higher than those of the reproduced outputs $P_R$ and $P_L$ of the pilot signals from the tracks adjacent the opposite sides of the main track. The output $P_M$ is detected and, on the basis of the detected output, the signals $S_1$ and $S_2$ are formed by employing a delay element such as a monostable multivibrator or the like.

**Claims**

1. A method of recording an information signal on a plurality of slanting tracks on a recording medium by way of a pair of rotary heads having different azimuth angles, the method comprising:

recording the information signal in a first predetermined area (ST) on each of the slanting tracks (T) formed without a guard band between adjacent tracks on the recording medium by the rotary heads (HA, HB); and

recording a tracking pilot signal (P) in at least a second predetermined area (PT) on each of the plurality of slanting tracks (T), wherein the positions at which the tracking pilot signal (P) is recorded on any three adjacent tracks (T) are such as not to overlap one another in a direction perpendicular to the tracking direction (13) of the rotary heads (HA, HB);

characterised in that:

the information signal is digitised to form a digital information signal for recording on the recording medium;

a plurality of tracking pilot signals (P) are recorded in the second predetermined area (PT) independently of the digital information signal;

erasing signals (E) are recorded between individual ones of the tracking pilot signals (P); and

each of the tracking pilot signals (P) in the second predetermined area (PT) on any one of the tracks (T) is arranged not to overlap any of the tracking pilot signals (P) on the adjacent two tracks (T) in the direction perpendicular to the tracking direction.

2. A method according to claim 1, wherein the recording medium is a magnetic tape and the plurality of pilot signals (P) and erasing signals (E) are recorded at least at both ends $(PT_1, PT_2)$ of each of the slanting tracks (T).

3. A method according to claim 2, wherein the plurality of pilot signals (P) erasing signals (E) are also recorded at the center $(PT_3)$ of each of the slanting tracks (T).

4. Apparatus for recording an information signal on a plurality of slanting tracks on a recording medium, the apparatus comprising:

a pair of rotary heads (HA, HB) having different azimuth angles and operative to record the information signal in a first predetermined area (ST) on each of the slanting tracks (T) formed without a guard band between adjacent tracks on the recording medium, the rotary heads (HA, HB) also being operative to record a tracking pilot signal (P) in at least a second predetermined area (PT) on each of the plurality of slanting tracks (T), wherein the positions at which the tracking pilot signal (P) is recorded on any three adjacent tracks (T) are such as not to overlap one another in a direction perpendicular to the tracking direction (13) of the rotary heads (HA, HB);

characterised in that:

the information signal is digitised to form a digital information signal for recording on the recording medium;

a plurality of tracking pilot signals (P) are recorded in the second predetermined area (PT) independently of the digital information signal;

erasing signals (E) are recorded between individual ones of the tracking pilot signals (P); and

each of the tracking pilot signals (P) in the second predetermined area (PT) on any one of the tracks (T) is arranged not to overlap any of the tracking pilot signals (P) on the adjacent two tracks (T) in the direction perpendicular to the tracking direction.

**Patentansprüche**

1. Verfahren zur Aufzeichnung eines Informationssignals in einer Vielzahl von auf einem Aufzeichnungsmedium schrägverlaufenden Spuren mittels eines Paares von Drehköpfen, die unterschiedliche Azimutwinkel haben, welches Verfahren

ein Aufzeichnen des Informationssignals in einem ersten vorbestimmten Bereich (ST) in jeder der schrägverlaufenden Spuren (T), die ohne Schutzabstand zwischen benachbarten Spuren auf dem Aufzeichnungsmedium gebildet sind, durch die Drehköpfe (HA, HB) und

ein Aufzeichnen eines Nachlaufleitsignals (P) in zumindest einem zweiten vorbestimmten Bereich (PT) in jeder der Vielzahl von schrägverlaufenden Spuren (T) enthält, wobei die Positionen, bei denen das Nachlaufleitsignal (P) in irgendwelchen von drei benachbarten Spuren (T) aufgezeichnet ist, derart sind, daß sie sich einander nicht in einer Richtung senkrecht zu der Nachlaufrichtung (13) der Drehköpfe (HA, HB) überlappen, dadurch gekennzeichnet, daß

das Informationssignal digitalisiert wird, um ein digitales Informationssignal zum Aufzeichnen auf dem Aufzeichnungsmedium zu bilden,

eine Vielzahl von Nachlaufleitsignalen (P) in dem zweiten vorbestimmten Bereich (PT) unabhängig von dem digitalen Informationssignal aufgezeichnet wird,

Löschsignale (E) zwischen individuellen der Nachlaufleitsignale (P) aufgezeichnet werden und

jedes der Nachlaufleitsignale (P) in dem zweiten vorbestimmten Bereich (PT) irgendeiner der Spuren (T) derart angeordnet ist, daß es sich nicht mit irgendeinem der Nachlaufleitsignale (P) in den benachbarten zwei Spuren (T) in der Richtung senkrecht zu der Nachlaufrichtung überlappt.

2. Verfahren nach Anspruch 1, bei dem das Aufzeichnungsmedium ein Magnetband ist und die Vielzahl von Nachlaufleitsignalen (P) und Löschsignalen (E) zumindest an beiden Enden $(PT_1, PT_2)$ jeder der schrägverlaufenden Spuren (T) aufgezeichnet werden.

3. Verfahren nach Anspruch 2, bei dem die Vielzahl von Nachlaufleitsignalen (P) und Löschsignalen (E) auch in dem Zentrum $(PT_3)$ jeder der schrägverlaufenden Spuren (T) aufgezeichnet werden.

4. Gerät zur Aufzeichnungs eines Informationssignals in einer Vielzahl von schrägverlaufenden Spuren auf einem Aufzeichnungsmedium, welches Gerät

ein Paar von Drehköpfen (HA, HB) enthält, die unterschiedliche Azimutwinkel haben und betreibbar sind, um das Informationssignal in einem ersten vorbestimmten Bereich (ST) in jeder der schrägverlaufenden Spuren (T), welche ohne Schutzabstand zwischen benachbarten Spuren auf dem Aufzeichnungsmedium ausgebildet sind, aufzuzeichnen, wobei die Drehköpfe (HA, HB) auch betreibbar sind, um ein Nachlaufleitsignal (P) in zumindest einem zweiten vorbestimmten Bereich (PT) in jeder der Vielzahl von schrägverlaufenden Spuren (T) aufzuzeichnen, wobei die Positionen, bei denen das Nachlaufleitsignal (P) in irgendwelchen von drei benachbarten Spuren (T) aufgezeichnet ist, derart sind, daß sie sich einander nicht in einer Richtung senkrecht zu der Nachlaufrichtung (13) der Drehköpfe (HA, HB) überlappen,

dadurch gekennzeichnet, daß

das Informationssignal digitalisiert wird, um ein digitales Informationssignal zum Aufzeichnen auf dem Aufzeichnungsmedium zu bilden,

eine Vielzahl von Nachlaufleitsignalen (P) in dem zweiten vorbestimmten Bereich (PT) unabhängig von dem digital Informationssignal aufgezeichnet wird,

Löschsignale (E) zwischen individuellen der Nachlaufleitsignale (P) aufgezeichnet werden und

jedes der Nachlaufleitsignale (P) in dem zweiten vorbestimmten Bereich (PT) irgendeiner der Spuren (T) derart angeordnet ist, daß es sich nicht mit irgendeinem der Nachlaufleitsignale (P) in den benachbarten zwei Spuren (T) in der Richtung senkrecht zu der Nachlaufrichtung überlappt.

## Revendications

1. Procédé d'enregistrement d'un signal d'information sur une pluralité de pistes inclinées se trouvant sur un support d'enregistrement à l'aide d'une paire de têtes rotatives possédant des angles azimutaux différents, le procédé comprenant les opérations suivantes:

enregistrer le signal d'information sur une première aire prédéterminée (ST) située sur chacune des pistes inclinées (T) formées sans bande de garde entre pistes adjacentes sur le support d'enregistrement à l'aide des têtes rotatives (HA, HB); et

enregistrer un signal pilote de poursuite de piste (P) dans an moins une deuxième aire prédéterminée (PT) sur chaque piste de la pluralité de pistes inclinées (T), où les positions auxquelles le signal pilote de poursuite de piste (P) est enregistré sur trois pistes adjacentes quelconques (T) sont telles qu'elles ne se chevauchent pas entre elles dans une direction perpendiculaire à la direction de poursuite de piste (13) des têtes rotative (HA, HB);

caractérisé en ce que:

le signal d'information est mis sous forme numérique de manière à former une signal d'information numérique en vue de l'enregistrement sur le support d'enregistrement;

une pluralité de signaux pilotes de poursuite de piste (P) sont enregistrés dans la deuxième aire prédéterminée (PT) indépendamment du signal d'information numérique;

des signaux d'effacement (E) sont enregistrés entre des signaux distincts pris parmi les signaux pilotes de poursuite de piste (P); et

chacun des signaux pilotes de poursuite de piste (P) se trouvant dans la deuxième aire prédéterminée (PT) sur l'une quelconque des pistes (T) est disposé des manière à ne chevaucher aucun des signaux pilotes de poursuite de piste (P) se trouvant sur les deux pistes adjacentes (T) dans la direction perpendiculaire à la direction de poursuite de piste.

2. Procédé selon la revendication 1, où le support d'enregistrement est une bande magnétique et la pluralité de signaux pilotes (P) et de signaux d'effacement (E) sont enregistrés au moins aux deux extrémités ($PT_1$, $PT_2$) de chacune des pistes inclinées (T).

3. Procédé selon la revendication 2, où la pluralité des signaux pilotes (P) et des signaux d'effacement (E) sont également enregistrés au centre ($PT_3$) de chacune des pistes inclinées (T).

4. Appareil permettant d'enregistrer un signal d'information sur une pluralité de pistes inclinées se trouvant sur un support d'enregistrement, l'appareil comprenant:

une paire de têtes rotatives (HA, HB) possédant des angles azimutaux différents et ayant pour fonction d'enregistrer le signal d'information dans une première aire prédéterminée (ST) se trouvant sur chacune des pistes inclinées (T) formées sans bande de garde entre pistes adjacentes sur le support d'enregistrement, les têtes rotatives (HA, HB) ayant également pour fonction d'enregistrer un signal pilote de poursuite de piste (P) dans au moins une deuxième aire prédéterminée (PT) sur chaque piste de la pluralité de pistes inclinées (T), où les positions auxquelles le signal pilote de poursuite de piste (P) est enregistré sur trois pistes adjacentes (T) quelconques sont telles qu'elle ne se chevauchent pas entre elles dans une direction perpendiculaire à la direction de poursuite de piste (13) des têtes rotative (HA, HB);

caractérisé en ce que:

le signal d'information est mis sous forme numérique afin de former un signal d'information numérique en vue de l'enregistrement sur le support d'enregistrement;

une pluralité de signaux pilotes de poursuite de piste (P) est enregistrée dans la deuxième aire prédéterminée (PT) indépendamment du signal d'information numérique;

des signaux d'effacement (E) sont enregistrés entre des signaux distincts pris parmi les signaux pilotes de poursuite suite de piste (P); et

chacun des signaux pilotes de poursuite de piste (P) se trouvant dans la deuxième aire prédéterminée (PT) sur l'une quelconque des pistes (T) est disposé de manière à ne chevaucher aucun des signaux pilote de poursuite de piste (P) se trouvant sur les deux pistes adjacentes (T) dans la direction perpendiculaire à la direction de poursuite de piste.

## F I G. 1

## F I G. 2

# F I G.  3

PT₁

ST₁

PT₃

ST₂

PT₂

T  T  T  T  T

# F I G.  4

14(20)

tP

13

E  E  E

E  E  E

P  P  P

l₂

E  E  E

E  E  E

P  P  P

θ

E  E  E

l₁

ST₂

# FIG. 5

AMP — 21

Pilot Signal Extracting Ckt. — 22

S/H — 23

S/H — 24

20

M — 25

PG — 26

Pulse Generating Ckt. — 27

S1

S2

+ − — 28

FIG. 6A

$P_M$

$P_R$

$P_L$

$P_L$

FIG. 6B (S1)

FIG. 6C (S2)